Europäisches Patentamt

European Patent Office

Office européen des brevets

(19)

(11) Veröffentlichungsnummer: **0 361 093**

**A1**

## EUROPÄISCHE PATENTANMELDUNG

(21) Anmeldenummer: **89115734.9**

(22) Anmeldetag: **25.08.89**

(51) Int. Cl.⁵ **B60R 3/04**

(30) Priorität: **13.09.88 DE 3831179**

(43) Veröffentlichungstag der Anmeldung:
**04.04.90 Patentblatt 90/14**

(84) Benannte Vertragsstaaten:
**AT BE CH DE ES FR GB GR IT LI LU NL SE**

(71) Anmelder: **Rumpp, Gerhard**
**Schornstrasse 2**
**D-8084 Inning/Ammersee(DE)**

(72) Erfinder: **Rumpp, Gerhard**
**Schornstrasse 2**
**D-8084 Inning/Ammersee(DE)**

(74) Vertreter: **Patentanwälte Grünecker,**
**Kinkeldey, Stockmair & Partner**
**Maximilianstrasse 58**
**D-8000 München 22(DE)**

(54) **Reinigungsvorrichtung zum Einbau in Kraftfahrzeugen.**

(57) Eine Reinigungsvorrichtung (1), welche sich insbesondere zur Reinigung von Schuhen eignet, ist für den Einbau in Kraftfahrzeuge vorgesehen und weist eine Öffnung (5) auf, die mit einer Säuberungsrampe (25) versehen ist. Von einem über die Säuberungsrampe (25) bewegten Gegenstand kann abtrennbares Material durch die Öffung (5) hindurchtreten. Vorzugsweise weist die Reinigungsvorrichtung (1) eine Bürstenanordnung (33) in ihrer Nachbarschaft auf, wodurch der Reinigungseffekt verbessert werden kann. In einer bevorzugten Ausführungsform ist die Reinigungsvorrichtung (1) in einem Trittbrett (3) eines Geländefahrzeuges angeordnet.

FIG.1

EP 0 361 093 A1

## Reinigungsvorrichtung zum Einbau in Kraftfahrzeugen

Die vorliegende Erfindung betrifft eine Reinigungsvorrichtung zum Einbau in Kraftfahrzeugen.

Beim Besteigen von Kraftfahrzeugen, insbesondere Geländewagen, haftet häufig Schmutz und im Winter insbesondere Schnee an den Schuhen der in das Fahrzeug einsteigenden Person. Dieses Problem tritt insbesondere auch bei auf dem Bau tätigen Personen auf, da der Untergrund auf Baustellen in der Regel nicht befestigt ist. Durch die Schmutz- bzw. Schneeverschleppung in das Fahrzeuginnere wird somit ein großer Verschleiß beispielsweise der Bodenteppiche hervorgerufen und es ist ein ständiges Säubern der Fahrgastzelle bzw. des Kofferraumes vorzunehmen.

Durch das Verschleppen von Schnee in den Fahrgastraum bzw. den Kofferraum werden die in der Regel aus Stoff bestehenden Bodenteppiche befeuchtet, was, insbesondere in der kalten Jahreszeit, dazu führen kann, daß die Bodenteppiche über mehrere Wochen, Tage oder sogar Monate feucht bleiben. Bei dem verschleppten Schnee handelt es sich in der Regel nicht um reinen Schnee, der sich dann in einigermaßen sauberem Wasser auf lösen würde, sondern dieser Schnee ist vielfach mit Tausalzen vermengt, die dann einen entsprechend korrosiven Angriff auf die Bodenbleche des Kraftfahrzeugs ausüben. Die über einen längeren Zeitraum befeuchteten Bodenteppiche führen auch zu einem Modern bzw. einer Fäulnis des Gewebes, was wiederum insbesondere beim schnellen Erwärmen der Teppiche im Frühjahr zu einer unangenehmen Geruchsentwicklung führen kann.

Durch ein starkes Befeuchten der Fußpedale des Fahrzeugs entsteht vielfach auch die Gefahr des Abgleitens der Schuhsohle von dem jeweiligen Pedal, insbesondere bei glatten Sohlen, so daß zusätzlich die Fahrsicherheit für den Fahrzeugfahrer stark beeinträchtigt werden kann.

Es ist deshalb Aufgabe der vorliegenden Erfindung, eine Reinigungsvorrichtung zum Einbau in Kraftfahrzeuge zu schaffen, mit der an Gegenständen, insbesondere an Schuhen anhaftender Schmutz bzw. Schnee vor dem Besteigen des Fahrzeugs entfernt werden kann.

Diese Aufgabe wird durch die kennzeichnenden Merkmale des Anspruchs 1 gelöst.

Dadurch, daß in einem zugänglichen Bereich des Kraftfahrzeugs eine eine Säuberungsrampe aufweisende Öffnung zum Durchtritt von einem an einem darüberbewegten Gegenstand abtrennbaren Material vorgesehen ist, wird erreicht, daß der zu reinigende Gegenstand beim Überstreichen der Reinigungsvorrichtung den anhaftenden Schmutz bzw. Schnee verliert, so daß die in den Fahrgastraum eingebrachten Gegenstände erheblich weniger schmutz- bzw. schneebehaftet sind.

Damit wird der durch Schmutz und Schnee hervorgerufene Verschleiß der jeweiligen Fahrgastzelle bzw. des gesamten Fahrzeugs erheblich reduziert, was nicht nur in einer längeren Lebensdauer der betroffenen Fahrzeugteile bzw. des Fahrzeugs resultiert, sondern auch erhebliche Einsparungen bei den Reinigungskosten mit sich bringt. Der geringere Verschleiß führt demzufolge auch zu einer Reduzierung des Wertverlustes des gesamten Fahrzeugs.

Vorteilhafte Ausbildungen der vorliegenden Erfindung ergeben sich aus den Unteransprüchen.

Wird die Säuberungsrampe als Abstreifkante ausgebildet, so wird ein besonders gründliches Abstreifen Schmutz und Schnee durch die hierbei erzeugte Schneidwirkung ermöglicht.

Bei Ausbildung der Säuberungsöffnung als nach unten zu offener Schacht wird vorteilhafterweise erreicht, daß der abgetrennte Schmutz oder Schnee sicher nach unten geleitet werden kann, was zu einem kontrollierten Abführen des Schmutzes bzw. Schnees führt.

Werden die Öffnungen mit der Säuberungsrampe in einem oberen Bereich eines Trittbretts eines Kraftfahrzeugs angeordnet, so ergibt sich hierbei eine besonders leicht zugängliche Anordnung der erfindungsgemäßen Reinigungsvorrichtung, und auch der Möglichkeit eines nachträglichen Einbaus in ein (abnehmbares) Trittbrett.

Erstreckt sich dabei die Reinigungsvorrichtung von der Oberseite des Trittbretts nach unten, so wird jedoch ein sicheres Ableiten des abzutrennenden Materials ermöglicht. Durch die Ausbildung des Schachtes als Rohr mit oben angeformter Abstreifkante wird eine besonders einfache Ausführungsform der vorliegenden Erfindung erzielt, die auch besonders einfach herzustellen ist.

Zur weiteren Vervollständigung des Reinigungsvorganges, insbesondere auch zum Putzen des Randbereichs bzw. Seitenbereichs der Schuhe oder von flächenhaften Gegenständen, ist in der Nachbarschaft im zugänglichen Bereich des Kraftfahrzeugs neben der Säuberungsöffnung eine Bürstenanordnung angeordnet. So kann speziell im Bereich der Sohlen der Schuhe eine entsprechende Reinigungswirkung erzielt werden.

Durch die Anordnung der Bürstenanordnung neben der Öffnung wird vorteilhafterweise erreicht, daß der Reinigungsvorgang schnell hintereinander sowohl am Abstreifbe reich als auch im Bürstenbereich vorgenommen werden kann, wobei die Bürstenanordnung in einfacher Ausführungsform als feststehende Bürste ausgebildet ist, welche in einer Fassung gelagert ist.

Durch eine federnde Lagerung wird eine besonders gute Reinigungswirkung erzielt, welche noch deutlich verbessert werden kann, wenn die Bürstenanordnung als eine rotierende Bürste ausgebildet ist. Diese rotierende Bürste kann dann vorzugsweise mit einem Antrieb versehen sein, der sie in Drehung versetzt. Dies kann auf einfache Weise beispielsweise dadurch erfolgen, daß durch Druck auf die Bürste ein Schalter betätigt wird, der die Antriebsvorrichtung anregt.

Die Bürstenanordnung kann vorteilhafterweise im äußeren Endbereich des Trittbretts oben und/oder unten angeordnet werden, wobei bei der Anordnung im unteren Bereich vorteilhafterweise eine Reinigung der Schuhoberseite erzielbar ist.

Weiterhin kann es von besonderem Vorteil sein, ein Abdeckorgan für die Öffnung und/oder für die Bürstenanordnung vorzusehen, wobei das Abdeckorgan im Falle des Durchtrittsschachtes sowohl oben als auch unten angeordnet werden kann. Dadurch kann ein Verstopfen durch Schmutz, Schnee und dergleichen insbesondere während der Fahrt verhindert werden. Insbesondere kann dadurch auch eine Vereisung der Bürstenhaare im Winter durch frierende Nässe vermindert werden, wenn ein Eintritt von Nässe unterbunden wird.

Weitere Einzelheiten, Merkmale und Vorteile der vorliegenden Erfindung ergeben sich aus der nachfolgenden Beschreibung von Ausführungsbeispielen unter Bezug auf die Zeichnung. Darin zeigt:

Fig. 1 eine mögliche Anordnung der erfindungsgemäßen Reinigungsvorrichtung in einem Trittbrett eines Geländefahrzeugs;

Fig. 2 eine Schnittansicht einer als Durchtrittsschacht ausgebildeten Säuberungsöffnung in einem Trittbrett;

Fig. 3 und 4 die obere bzw. untere Anordnung einer Bürstenanordnung gemäß der vorliegenden Erfindung;

Fig. 5 die Ausbildung der Bürstenanordnung als rotierende Bürste, deren Längsachse in Fahrtrichtung verläuft;

Fig. 6 die Ausbildung der Bürstenanordnung als rotierende Bürste, deren Drehachse quer zur Fahrtrichtung verläuft;

Fig. 7 eine weitere Ausführungsform der Bürstenanordnung, die federbelastet um eine Achse schwenkbar angeordnet ist; und

Fig. 8 eine weitere Ausführungsform der Bürstenanordnung, die im wesentlichen parallel verschieblich quer zur Trittbrett- bzw. Konsolenoberfläche des Fahrzeugs angeordnet ist.

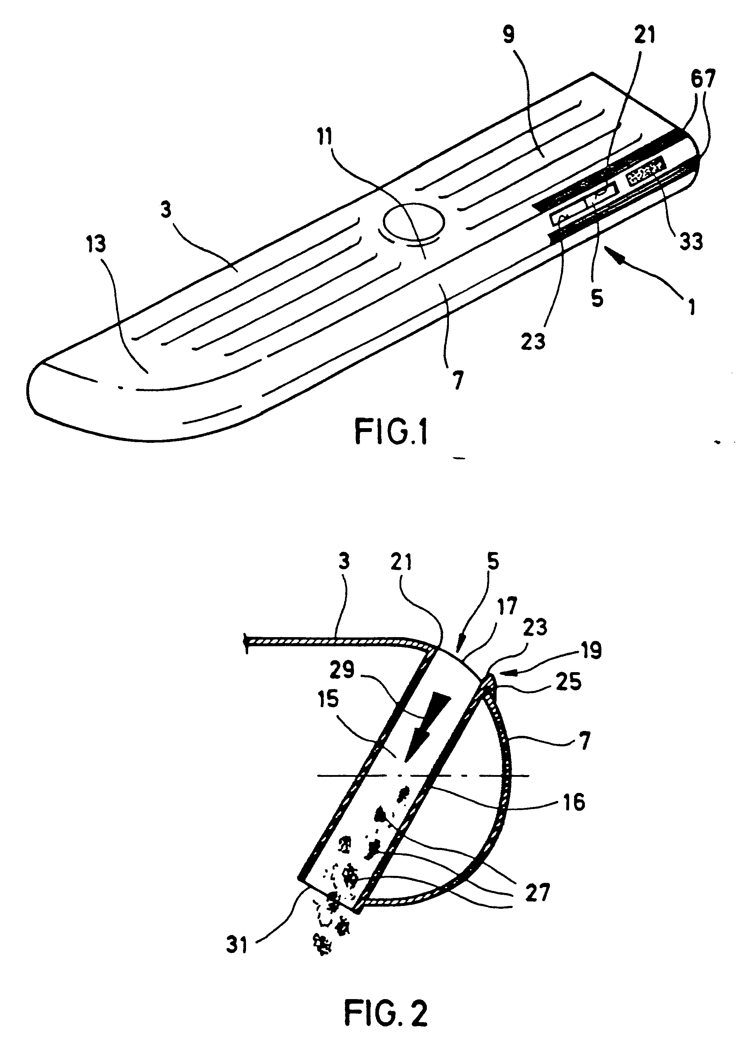

In Fig. 1 ist eine erfindungsgemäße Reinigungsvorrichtung 1 in einem Trittbrett 3 angeordnet, wie es beispielsweise für Geländewagen Verwendung findet. In dem Trittbrett 3 ist eine Öffnung oder Säuberungsöffnung 5 im äußeren Endbereich 7 des Trittbretts 3 angeordnet. Der äußere Endbereich 7 ist im vorliegenden Fall als im wesentlichen kreisrunder Bereich ausgebildet.

Die Säuberungsöffnung 5 ist in einem Endbereich 9 des Trittbretts 3 (bezogen auf die Fahrtrichtung) angeordnet. Es ist selbstverständlich möglich, die Säuberungsöffnung 5 auch in einem anderen Bereich des Trittbretts 3 anzuordnen. Beispielsweise in einem Mittenbereich 11 oder in dem anderen Endbereich 13. Weiterhin ist es möglich, nicht nur eine Säuberungsöffnung 5 in dem Trittbrett 3 anzuordnen, sondern auch mehrere Öffnungen, beispielsweise zwei Säuberungsöffnungen 5, welche dann im Bereich der Vordertür bzw. Hintertür des Fahrzeugs angeordnet werden können.

Wie aus Fig. 2 ersichtlich, ist die Säuberungsöffnung 5 als Durchtrittsschacht 15 ausgebildet, der in dem Trittbrett 3 derart geneigt angeordnet ist, daß von oben eingeführtes Material 27 von selbst nach unten hindurchfallen kann. In einer bevorzugten Ausführungsform ist der Durchtrittsschacht 15 dabei derart angeordnet, daß seine Neigung von außen sich in Richtung auf das Fahrzeug erstreckt und seine obere Öffnung 17 sich im oberen Bereich 19 des Trittbretts 3 im Bereich des äußeren Endbereichs 7 befindet. Dies hat den Vorteil, daß der zu putzende Schuh nahezu quer zur oberen Öffnung 17 auf den Schacht gesetzt werden kann, wodurch ein besonders wirksames Abstgreifen des am Schuh anhaftenden Schmutzes bzw. Schnees erfolgen kann.

Wie aus Fig. 1 und 2 ersichtlich, weist die Säuberungsöffnung 5 eine obere Kante 21 und eine untere Kante 23 auf. Beide Kanten verlaufen vorzugsweise parallel zueinander und in Fahrtrichtung bzw. in Ebene des Fahrzeugs. Wie aus Fig. 2 ersichtlich, ist die untere Kante 23 als Abstreifkante 23 derart ausgebildet, daß sie einen die Fläche des Trittbretts 3 überragende Säuberungsrampe 25 aufweist, die als scharfe Abstreifkante ausgebildet ist. Durch Ansetzen der beschmutzten Fußsohle auf der unteren Abstreifkante 23 der Säuberungsrampe 25 wird somit eine gute Scher- und Schneidwirkung erreicht, so daß der anhaftende Schmutz bzw. Schnee zuverlässig und vollständig vom Schuh abgestreift werden kann. Das abgestreifte Material 27 fällt durch den Durchtrittsschacht 15 in Richtung des Pfeiles 29 hindurch und tritt an einer unteren Öffnung 31 des Durchtrittsschachtes 15 nach unten aus. Der Durchtrittsschacht kann konstruktiv als ein mit der Säuberungsrampe 25 versehenes Rohr 16 ausgebildet sein.

Die obere Kante 21 der Säuberungsausnehmung 5 ist vorzugsweise ebenfalls als scharfe Abstreifkante ausgebildet, so daß fest anhaftender Schmutz oder Schnee durch eine schlagende Bewegung des Schuhs in Fahrzeugrichtung hin abgeschlagen werden kann und ebenfalls in der Säuberungsöffnung 5 aufgefangen wird. Auch die obere Kante 21 kann als Rampe gemäß der Rampe 25 ausgebildet werden.

Gemäß Fig. 2 ist der Durchtrittsschacht 15 als sowohl oben als auch unten offener Schacht ausgebildet. Es ist jedoch auch möglich, den Schacht unten und oder oben verschließbar bzw. abdeckbar auszubilden. Hierbei kann an der unteren Öffnung beispielsweise eine einfache Klappe (nicht dargestellt) angeordnet werden, die sich aufgrund des angesammelten Materials 27 öffnet, so daß sich dadurch der Durchtrittsschacht 15 selbsttätig entleert. Die Öffnung in der Klappe kann jedoch auch derart steuerbar vorgesehen werden, daß sie sich beispielsweise nur öffnet, wenn die der Reinigungsvorrichtung 1 zugeordnete Türe des Fahrzeugs geöffnet wird. Dies hat den Vorteil, daß während der Fahrt der Durchtrittsschacht 15 von unten her geschlossen ist, so daß beispielsweise durch die Fahrt hochgeschleuderter Schmutz oder Schnee von unten nicht in den Durchtrittsschacht eindringen kann, so daß die Gefahr des Verstopfens der unteren Öffnung 31 vermieden wird. Andere Ausführungsformen, wie Stopfen und dergleichen, sind ebenfalls möglich.

Weiterhin kann auch eine beispielsweise verschieblich an geordnete Abdeckung im Bereich der oberen Öffnung 17 des Durchtrittsschachts 15 angeordnet werden, so daß die Säuberungsöffnung 5 bzw. der Durchtrittsschacht 15 gegen ein Verstopfen von oben durch aufgewirbelte Schmutz- bzw. Schnee- oder Eisklumpen geschützt werden kann.

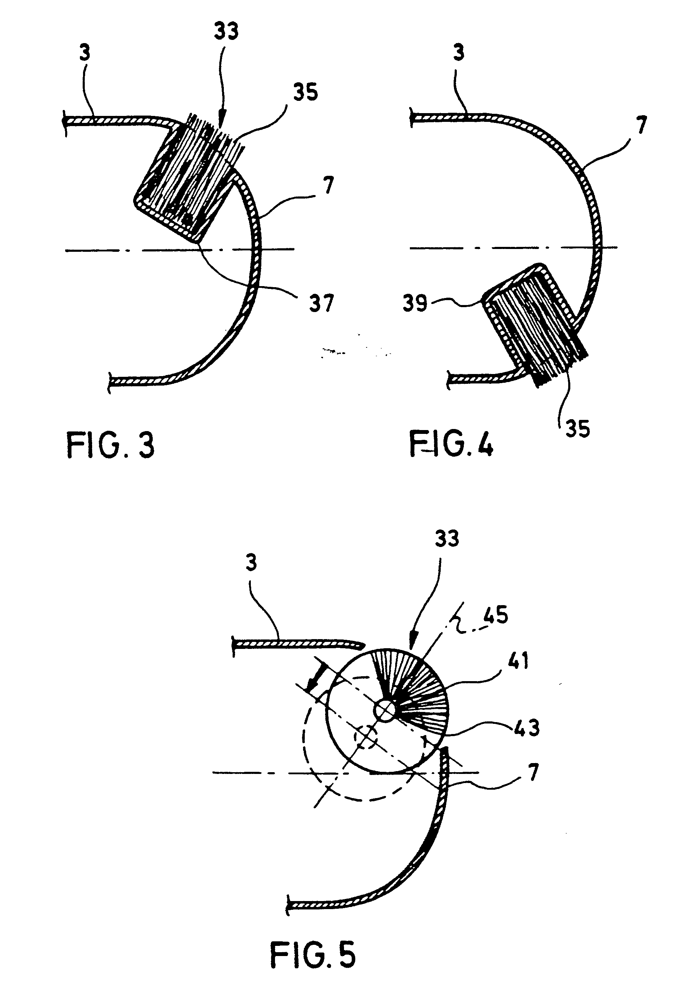

Wie weiterhin aus Fig. 1 ersichtlich, weist die erfindungsgemäße Reinigungsvorrichtung in der Nähe der Säuberungsausnehmung 5 eine weitere Ausnehmung oder Öffnung zur Aufnahme einer Bürstenanordnung 33 auf. Gemäß Fig. 3 ist die Bürstenanordnung 33 als Bürstensatz oder Bürste 35 ausgebildet, die in einer Fassung 37 im äußeren Endbereich 7 des Trittbretts 3 angeordnet ist. Durch die Bürste 35 wird eine weitere Verbesserung der Reinigungswirkung der erfindungsgemäßen Reinigungsvorrichtung 1 ermöglicht. Ist die Bürste 35 wie in Fig. 3 dargestellt angeordnet, so ergibt sich vorteilhafterweise eine erhöhte Reinigung insbesondere des Sohlenbereiches des zu reinigenden Schuhs, da am Schuh nach dem Abstreifen über die Schuhabstreifkante verbleibende Schmutzrechte abgebürstet werden können. Darüber hinaus können flächenhafte Gegenstände, beispielsweise Ski, gut gereinigt werden. Wie aus Fig. 4 ersichtlich, kann die Bürste 35 auch im unteren Bereich in einer Ausnehmung 39 angeordnet werden, was insbesondere zum Reinigen der Oberseite des Schuhs vorteilhaft ist.

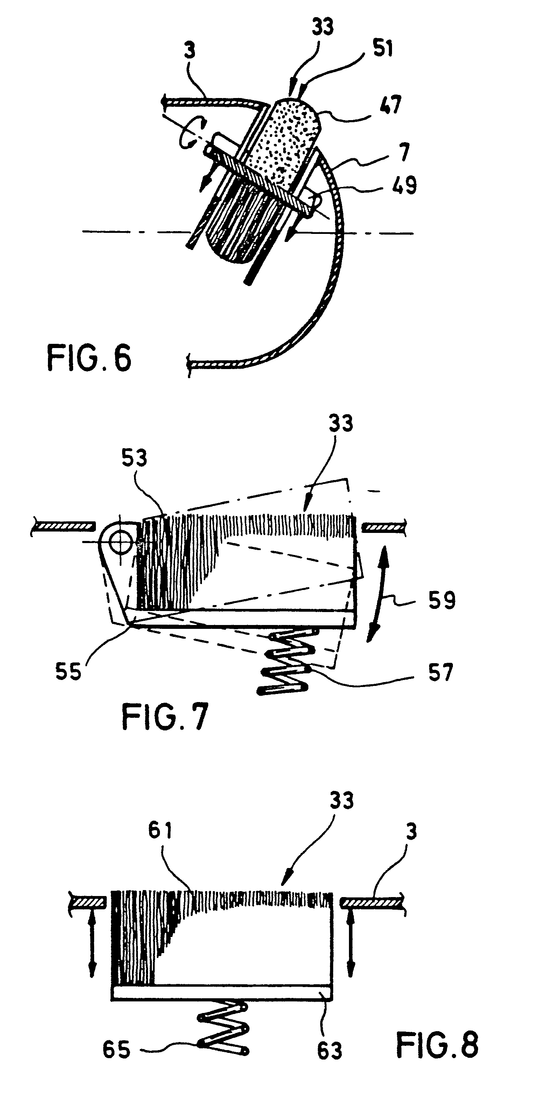

In der einfachsten Ausführungsform ist der Bürstensatz 35 als feststehende Bürste ausgebildet, die über die sie umgebende Oberfläche unter Umständen deutlich hinausragt. In einer alternativen Ausführungsform kann die Bürstenanordnung 33 jedoch auch als rotierende Bürste 41 in Form beispielsweise einer Bürstenwalze ausgebildet sein. Diese ist drehbar auf einer Achse oder Welle 43 gelagert, die, wie aus Fig. 5 ersichtlich, in Fahrtrichtung bzw. in der Ebene des Fahrzeugs verläuft. In der Ausführungsform gemäß Fig. 5 ist die rotierende Bürste 41 wiederum im oberen Bereich des äußeren Endbereichs 7 des Trittbretts 3 angeordnet. Die rotierende Bürste 41 wird in geeigneter Weise in Drehung versetzt, beispielsweise durch einen mit ihr verbundenen Elektromotor od. dgl., so daß durch Aufsetzen des Schuhs auf die Bürste dieser entsprechend weiter gesäubert wird. Dabei wird durch Druck auf die Bürste ein Schalter betätigt, der dann ihren Antrieb anregt.

In einer weiteren bevorzugten Ausführungsform ist die Achse oder Welle 43 der rotierenden Bürste 41 verschiebbar entlang einer Ebene 45 gelagert, so daß die rotierende Bürste 41 für den Betrieb beispielsweise nach oben geschoben werden kann, so daß beispielsweise eine größere Auflagefläche der Bürste an dem Schuh erzeugbar ist.

Andererseits kann der Antrieb der rotierenden Bürste 41 auch derart ausgestaltet werden, daß die rotierende Bürste 41 in reibschlüssige Anlage mit einer angetriebenen Walze kommt (nicht dargestellt), so daß dadurch die Bürste 41 in Drehbewegung versetzt wird.

Im Gegensatz zur Anordnung der rotierenden Bürste 41 in Fahrtrichtung im Falle eines Trittbretts 3 kann auch eine rotierende Bürste 47 quer zur Fahrtrichtung d.h. quer zur vorhergehenden Ausführung auf einer Achse oder Welle 49 angeordnet werden. Der Antrieb der rotierenden Bürste 47 kann gleichermaßen wie bei der rotierenden Bürste 41 erfolgen, entweder durch direkten Antrieb der Achse oder Welle 49 oder durch Andrücken an eine (nicht dargestellte) angetriebene Walze. Während die rotierende Bürste 41 insbesondere für eine flächige Anlage am Schuh geeignet ist, ist die Anordnung der rotierenden Bürste 47 insbesondere für die Reinigung des gegenüber dem Schuhabsatz versetzten Bereiches des Schuhs zwischen Schuhabsatz und vorderen Auftrittsbereiches des Schuhs geeignet. Hierzu kann die rotierende Bürste anstelle eines abgerundeten Außenbereichs auch einen im Querschnitt rechteckförmigen Außenbereich aufweisen, so daß hierbei eine besonders gute Anlage der Bürste an die Sohlenunterseite erzielbar ist.

Die Fig. 7 und 8 zeigen weitere Ausführungsformen der Bürstenanordnung 33 der erfindungsgemäßen Reinigungsvorrichtung 1. Wie in Fig. 7 dargestellt, ist eine im wesentlichen fest gelagerte bzw. abgestützte Bürste 53 federnd einseitig in einer Fassung oder Lageranordnung 55 angeordnet. Dabei wirkt gegen die Lageranordnung 55 eine Feder 57 und die Lageranordnung 55 kann in Richtung des Doppelpfeiles 59 geschwenkt werden.

Als eine erste Ausführungsform der Anordnung gemäß Fig. 7 kann die Schwenkbewegung von der horizontalen Lage der Bürste 53 aus in die Tiefe erfolgen, wie durch die gestrichelten Linien angedeutet. Dadurch wird eine starke Umhüllung der Bürste 53 bei der Reinigung der Schuhe erzeugt, was zu einer deutlich besseren Reinigungswirkung führt. In einer weiteren Ausgestaltung kann die Bürstenanordnung 33 bzw. Bürste 53 auch aus ihrer horizontalen Lage in eine angehobene Stellung (strichpunktiert) angehoben werden, so daß ein größerer Bürstenbereich zur Anlage an den zureinigenden Schuh zur Verfügung steht.

Gemäß Fig. 8 ist eine Bürste 51, welche im wesentlichen wie die Bürste 53 einen rechteckförmigen Querschnitt aufweist, derart federnd gelagert, daß sie quer zur Oberflächenebene des Trittbretts 3 verschiebbar ist. Dabei ist die Bürste 61 wiederum in einer Fassung oder Lageranordnung 63 gelagert, an der eine Feder 65 angreift. Es können selbstverständlich andere Mittel für eine elastische Federung bzw. mehrere Federn 65 vorgesehen werden, um eine gleichmäßig verteilte, auf die Lageranordnung 63 wirkende Federkraft zu erzeugen. Auch die Bürstenanordnungen gemäß den Fig. 5 bis 8 können mit einer geeigneten Abdeckung versehen sein, so daß ein Verschmutzen beispielsweise durch Staub, Schnee usw. vermieden wird. Dies ist insbesondere dann von Vorteil, wenn die Bürstenanordnung 33 zum Entfernen von Schnee verwendet wird, da der Schnee sich zwischen den Bürstenhaaren festsetzen und gefrieren kann, so daß durch Vereisung der Bürste die Reinigungswirkung erheblich vermindert werden würde.

Die Ausführungsformen der Bürstenanordnungen 33 gemäß den Fig. 3 bis 8 können einzeln oder auch in beliebiger Kombination an verschiedenen Stellen des Trittbrettes bzw. der Konsole des Fahrzeugs angeordnet werden. Weiterhin kann die erfindungsgemäße Reinigungsvorrichtung 1 auch im Bereich der Hecktüre bzw. des Kofferraumdeckels des Fahrzeugs angeordnet werden, was insbesondere vorteilhaft ist, wenn die Schuhe gewechselt werden sollen, und der Heckbereich bzw. Kofferraum des Fahrzeugs zur Aufnahme der verschmutzten Schuhe dienen soll. Eine besondere Anwendung ergibt sich hierbei für das Reinigen von Skistiefeln, die regelmäßig nach Benützung und vor Besteigen des Fahrzeugs gegen leichtere Schuhe ausgewechselt werden, da zumindest für den Fahrzeugfahrer ein Bedienen des Fahrzeugs mit Skischuhen nahezu unmöglich ist. Ähnliches gilt auch für schwere Wander- und Bergsteigerschuhe oder Joggingschuhe.

Darüber hinaus kann die erfindungsgemäße Reinigungsvorrichtung auch für andere Gegenstände als Schuhe verwendet werden, beispielsweise für verwendete Gerätschaften wie Schaufeln, Haken ud.dgl. bzw. insbesondere zur Reinigung von Skioberflächen.

Hierzu kann die untere Abstreifkante 23 der Säuberungs öffnung 5 bzw. die Säuberungsrampe 25 mit einer elastischen Schicht überzogen sein, die einerseits die gewünschte Schneid- bzw. Scherwirkung sicherstellt und andererseits ein Verkratzen beispielsweise von Skioberflächen vermeidet.

Weiterhin kann im Bereich der erfindungsgemäßen Reinigungsvorrichtung 1 eine gummiartige Auflage bzw. ein gummiartiger Einsatz in Form von Gummistreifen, wie aus Fig. 1 ersichtlich, vorgesehen sein, so daß ein zu leichtes Abrutschen der Schuhsohlen, insbesondere im Bereich der Bürstenanordnung 33, vermieden wird.

**Ansprüche**

1. Reinigungsvorrichtung, insbesondere für Schuhe, zum Einbau in Kraftfahrzeuge, **dadurch gekennzeichnet,** daß in einem zugänglichen Bereich des Kraftfahrzeugs eine eine Säuberungsrampe (25) aufweisende Öffnung (5) zum Durchtritt von einem an einem darüber bewegten Gegenstand abtrennbaren Material (27) vorgesehen ist.

2. Reinigungsvorrichtung nach Anspruch 1, **dadurch gekennzeichnet,** daß die Säuberungsrampe (25) als Abstreifkante (23) ausgebildet ist.

3. Reinigungsvorrichtung nach Anspruch 1 oder 2, **dadurch gekennzeichnet,** daß die Öffnung (5) als nach unten zu offener Schacht (15) ausgebildet ist.

4. Reinigungsvorrichtung nach einem der Ansprüche 1 bis 3, **dadurch gekennzeichnet,** daß die Öffnung (5) und die Säuberungsrampe (25) in einem oberen Bereich eines Trittbretts (3) eines Kraftfahrzeugs angeordnet sind.

5. Reinigungsvorrichtung nach Anspruch 4, **dadurch gekennzeichnet,** daß sich die als Schacht (15) ausgebildete Öffnung (5) von der Oberseite des Trittbretts (3) nach unten erstreckt.

6. Reinigungsvorrichtung nach Anspruch 5, **dadurch gekennzeichnet,** daß der Schacht (15) als Rohr (16) mit oben angeformter Abstreifkante (23) ausgebildet ist.

7. Reinigungsvorrichtung nach einem der Ansprüche 1, **dadurch gekennzeichnet,** daß im zugänglichen Bereich des Kraftfahrzeugs in Nachbarschaft der Öffnung (5) eine Bürstenanordnung (33) angeordnet ist.

8. Reinigungsvorrichtung nach Anspruch 7, **dadurch gekennzeichnet,** daß die Bürstenanordnung (33) aus einer in einer Fassung (37, 39, 55, 63) feststehenden Bürste (35, 53, 61) gebildet und neben der Öffnung (5) angeordnet ist, wobei sie um eine Achse schwenkbar oder entlang der Achse verschiebbar angeordnet ist.

9. Reinigungsvorrichtung nach einem der Ansprüche 7 oder 8, **dadurch gekennzeichnet, daß** die Bürste (53, 61) federnd gelagert ist.

10. Reinigungsvorrichtung nach Anspruch 7 oder 9, **dadurch gekennzeichnet, daß** die Bürstenanordnung (33) als rotierende Bürste (41, 47) ausgebildet ist.

11. Reinigungsvorrichtung nach Anspruch 10, **dadurch gekennzeichnet, daß** die rotierende Bürste (41, 47) durch Druckbetätigung, vorzugsweise eines Schalters über eine geeignete Antriebsvorrichtung in Drehung versetzbar ist.

12. Reinigungsvorrichtung nach Anspruch 7 bis 11, **dadurch gekennzeichnet, daß** die Bürstenanordnung (33) im äußeren Endbereich (7) des Trittbretts (3) oben und oder unten anordenbar ist.

13. Reinigungsvorrichtung nach einem der Ansprüche 7 bis 12, **dadurch gekennzeichnet, daß** ein Abdeckorgan für die Öffnung (5) für eine Abdeckung von unten und oder von oben und oder für die Bürstenanordnung (33) vorgesehen ist.

**FIG.1**

**FIG. 2**

FIG. 3

FIG. 4

FIG. 5

FIG. 6

FIG. 7

FIG. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-1 578 863 (STANWOOD)<br>* Insgesamt * | 1-6 | B 60 R 3/04 |
| X | US-A-2 296 629 (COPPOCK)<br>* Insgesamt * | 1-5 | |
| X | GB-A- 29 482 (PICKFORD)(A.D. 1913)<br>* Figuren; Seite 2, Zeilen 24-42 * | 1,2,4,7 | |
| Y | | 8,9,13 | |
| Y | FR-A- 469 717 (GRIFFE)<br>* Insgesamt * | 8,9,13 | |
| X | FR-A- 437 574 (NICHOLSON)<br>* Figuren 1,2,4; Seite 1, Zeile 39 –<br>Seite 2, Zeile 27; Seite 2, Zeilen<br>73-103 * | 1,2,4,7<br>,8,13 | |
| A | DE-C- 603 201 (STEINMETZ)<br>* Figuren; Seite 1, Zeilen 1-11; Seite<br>2, Zeilen 14-38 * | 7,10 | |
| A | CA-A- 932 512 (LAMBERT)<br>* Figuren; Seite 3, Zeilen 15-22; Seite<br>4, Zeilen 9-15 * | 7,8,10,<br>11,13 | RECHERCHIERTE SACHGEBIETE (Int. Cl.5)<br><br>B 60 R |

Der vorliegende Recherchenbericht wurde für alle Patentansprüche erstellt

| Recherchenort | Abschlußdatum der Recherche | Prüfer |
|---|---|---|
| DEN HAAG | 15-12-1989 | DUBOIS B.F.J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument